# EUROPÄISCHE PATENTSCHRIFT

(11) **EP 2 015 047 B1**
(45) Veröffentlichungstag und Bekanntmachung des Hinweises auf die Patenterteilung: **05.09.2012**
(21) Anmeldenummer: 08159494.7
(22) Anmeldetag: 02.07.2008
(51) Int. Cl.: B23B 31/40, B23B 31/19, G01M 1/04, G01M 1/24, B23B 31/00

(54) **Verfahren und Vorrichtung zum Zentrieren und Spannen eines Werkstücks in einer Auswuchtmaschine**
Method and device for centering and clamping a workpiece in a balancing machine
Procédé et dispositif de centrage et de fixation d'une pièce à usiner dans une machine d'équilibrage

(30) Priorität: 11.07.2007 DE 102007032608
(43) Veröffentlichungstag der Anmeldung: 14.01.2009
(73) Patentinhaber: Schenck RoTec GmbH, 64293 Darmstadt (DE)
(72) Erfinder: Dölp, Jürgen, 64293, Darmstadt (DE); Muth, Christian, 64401, Groß-Bieberau (DE); Dr. Timtner, Karlheinz, 61352, Bad Homburg (DE)
(74) Vertreter: Haar, Lucas Heinz Jörn

(56) Entgegenhaltungen:
- EP-A2- 0 557 240
- DE-A1- 10 305 714

## Beschreibung

Die Erfindung betrifft ein Verfahren zum Zentrieren und Spannen eines Werkstücks, insbesondere einer Gelenkwelle, in einer Auswuchtmaschine und ein Spannfutter zur Durchführung des Verfahrens.

Zum Auswuchten müssen Werkstücke in einer Auswuchtmaschine derart drehbar gelagert werden, dass die Rotationsachse, die die Werkstücke jeweils in ihrer späteren Betriebslage einnehmen, möglichst genau mit der Rotationsachse der Auswuchtmaschine übereinstimmt. Bei der Aufnahme der Werkstücke in einem Spannfutter werden die Werkstücke zur Festlegung der Rotationsachse in der Regel mit einer meist zylindrischen Zentrierfläche und einer sich radial erstreckenden, rotationssymmetrischen, meist ebenen Anlagefläche versehen, durch welche die Rotationsachse des Werkstücks bestimmt ist. Im Spannfutter sind mit diesen Flächen zusammenwirkende Aufnahmen, beispielsweise ein radial abstützender Zentrierspannkörper, axial abstützende Spannflächen oder dergleichen, vorgesehen, an denen das Werkstück mit Hilfe von Spannelementen festgespannt wird. Beim Festspannen kann es erforderlich sein, dass das Spannen an der Zentrierfläche des Werkstücks und das Spannen an der radialen Anlagefläche nicht gleichzeitig erfolgen kann, so dass besondere Sorgfalt notwendig ist, damit ein Schrägspannen des Werkstücks vermieden wird.

Gelenkwellen werden zum Auswuchten üblicherweise in horizontaler Lage mit ihren Enden an zwei Spindeln einer Auswuchtmaschine befestigt, wobei jede Spindel ein Spannfutter hat, in dem der am Gelenkwellenende angeordnete Flansch zentriert und gespannt wird. Hierbei werden Spannfutter verwendet, die so eingerichtet sind, dass der Flansch der Gelenkwellen in seiner Kegelspanneinrichtung, die in eine Bohrung des Flansches eingreift, zentriert und mit großer Betätigungskraft radial gespannt wird. Anschließend wird der Flansch mit einer radialen Anlagefläche mittels Zugstangen und den Flansch von außen umgreifenden Spannelementen gegen eine Spannfläche des Futters gedrückt. Hierbei kann es vorkommen, dass aufgrund der zuvor erfolgten radialen Spannung mit großer Betätigungskraft die axiale Anpresskraft der Spannelemente nicht mehr ausreicht, um die Anlagefläche des Flansches gleichmäßig an die Spannfläche des Futters anzudrücken. Es kann dadurch eine Schräglage des Flansches entstehen, die beim Auswuchten einen unzulässig großen und nicht reproduzierbaren Fehler verursacht.

Ein Verfahren nach dem Oberbegriff des Patentanspruchs 1 und eine Vorrichtung nach dem Oberbegriff des Patentanspruchs 3 sind aus DE 103 05 714 A1 bekannt. Das Dokument offenbart ein zum dynamischen Auswuchten von Bauteilen bestimmtes Wuchtfutter mit einer zentrierenden Spannzange, einer axialen Anschlagfläche für das Bauteil und mehreren drehbaren und axial verschiebbaren Spannpratzen. Die Spannzange wird durch eine Tellerfederpaket in die Schließlage gedrückt und durch einen axial beweglichen Betätigungsstößel, der auch die Spannpratzen bewegt, entgegen der Federkraft geöffnet. Zum Auswuchten eines Bauteils wird der Betätigungsstößel so verstellt, dass die Spannpratzen ausgefahren und dabei gleichzeitig auswärts geschwenkt werden und die Spannzange geöffnet wird. Nach dem Einsetzen des Bauteils in die Spannzange wird der Stößel zurückgezogen, so dass das Bauteil durch die Spannzange koaxial zur Wuchtfutterachse festgeklemmt und durch die einwärts schwenkenden und zurück fahrenden Spannpratzen mit einem Flansch an der Anschlagfläche festgespannt wird. Zentrieren und axiales Festspannen des Bauteils erfolgt hierbei nacheinander. Dies kann zu Spannfehlern führen.

Der Erfindung liegt die Aufgabe zugrunde, ein Verfahren der eingangs genannten Art anzugeben, welches Spannfehler vermeidet und ein sehr genaues Spannen der Werkstücke gewährleistet. Weiterhin soll das Verfahren automatisch durchführbar sein. Es ist weiterhin Aufgabe der Erfindung, ein Spannfutter für eine Auswuchtmaschine zu schaffen, welches ein automatisches Zentrieren und Spannen von Werkstücken, insbesondere Gelenkwellen, mit großer Genauigkeit gewährleistet.

Nach der Erfindung umfasst das Verfahren zur Lösung der genannten Aufgabe die in Patentanspruch 1 angegebenen Schritte und Merkmale.

Nach dem erfindungsgemäßen Verfahren wird das Werkstück als erstes mit einer relativ kleinen ersten Kraft mit der ebenen, radialen Anlagefläche an die Spannfläche des Futters angedrückt. Hierdurch wird eine Parallelausrichtung der Rotationsachsen von Futter und Werkstück erreicht, wobei das Werkstück jedoch für die anschließende Zentrierung noch radial verschiebbar ist. Durch das anschließende Spannen des Zentrierspannkörpers kann daher das Werkstück exakt zentriert werden, wobei durch die axiale Wirkung der ersten Kraft der Kontakt zwischen der ebenen Anlagefläche und der Spannfläche und damit die richtige Ausrichtung der Rotationsachse des Werkstücks beibehalten bleibt. Nach dem radialen Spannen des Zentrierspannkörpers, was auch mit großer Kraft erfolgen kann, ist die Rotationsachse des Werkstücks optimal zur Rotationsachse des Spannfutters ausgerichtet, so dass durch das anschließende axiale Spannen des Werkstücks mit der wesentlich höheren zweiten Kraft die endgültige Fixierung des Werkstücks in dem Spannfutter erfolgen kann. Ein Schrägspannen des Werkstücks wird hierbei vermieden. Vorzugsweise ist die zweite Kraft wenigstens um den Faktor 3 größer als die erste Kraft.

Eine vorteilhafte Vorrichtung zur Durchführung des erfindungsgemäßen Verfahrens umfasst nach der Erfindung die in Patentanspruch 3 angegebenen Merkmale.

Die erfindungsgemäße Vorrichtung ermöglicht das automatische Spannen und Zentrieren eines Werkstücks mit definierten Kräften und vermeidet zuverlässig das Auftreten von Spannfehlern. Die Vorrichtung hat weiterhin den Vorteil, dass sie durch die Federelemente spielfrei gehalten wird und daher keine die Genauigkeit der Unwuchtmessung störenden Schwingungen auftreten.

Die Erfindung wird nachfolgend anhand von Ausführungsbeispielen näher erläutert, die in der Zeichnung dargestellt sind. Es zeigen
- Figur 1: einen Axialschnitt eines mit der Spindel einer Auswuchtmaschine verbindbaren Spannfutters,
- Figur 2: einen Ausschnitt des Spannfutters gemäß Figur 1,
- Figur 3: einen Axialschnitt einer zweiten Ausführungsform eines mit der Spindel einer Auswuchtmaschine verbindbaren Spannfutters und
- Figur 4: einen Ausschnitt einer dritten Ausführungsform eines mit der Spindel einer Auswuchtmaschine verbindbaren Spannfutters.

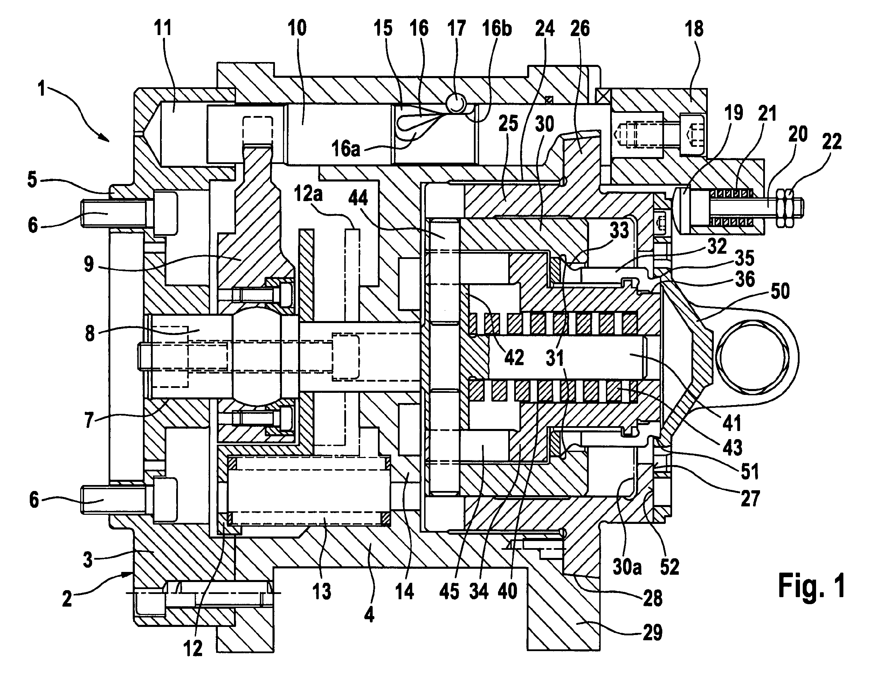

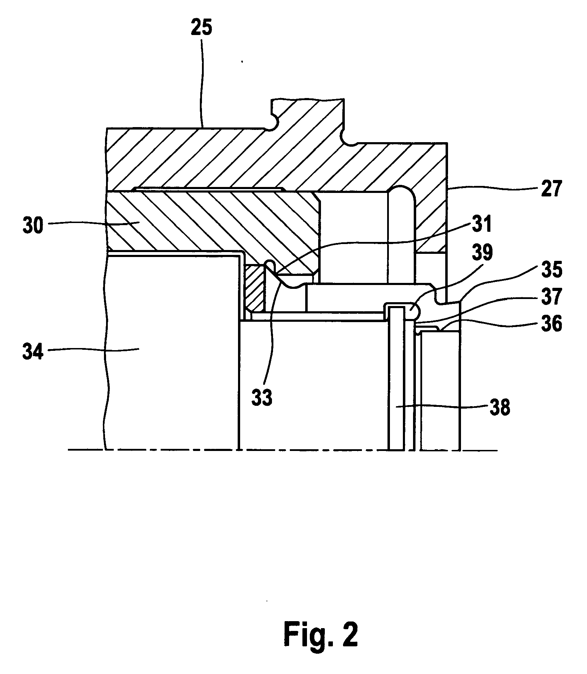

Das in den Figuren 1 und 2 dargestellte Spannfutter 1 hat ein Futtergehäuse 2, das aus einem Flanschteil 3 und einem Gehäuseteil 4 zusammengesetzt ist. An dem Flanschteil 3 ist ein Zentrierring 5 ausgebildet, der zur Zentrierung des Flanschteils 3 an einem Spindelflansch einer Auswuchtmaschine dient. Mittels Schrauben 6 kann das Flanschteil 3 an dem Spindelflansch befestigt werden.

Das Futtergehäuse 2 hat eine mittige Bohrung 7, in der ein Betätigungselement 8 längs beweglich gelagert ist. An dem Betätigungselement 8 sind mindestens zwei Arme 9 befestigt, die sich im Futtergehäuse 2 radial nach außen erstrecken. Die radial äußeren Enden der Arme 9 sind jeweils mit einer Zugstange 10 gekuppelt, die in einer zur Bohrung 7 achsparallelen Bohrung 11 im Futtergehäuse 2 längsbeweglich und drehbar gelagert ist. Die Kupplung zwischen einem Arm 9 und einer Zugstange 10 ist so ausgebildet, dass sich die Zugstange 10 relativ zum Arm 9 drehen kann. In axialer Richtung ist die Kupplung formschlüssig und im Wesentlichen spielfrei. Auf der dem Flanschteil 3 abgekehrten Seite der Arme 9 trägt das Betätigungselement 8 einen Federteller 12. Mehrere vorgespannte Druckfedern 13 sind in gleichmäßigem Abstand voneinander um das Betätigungselement 8 herum angeordnet und zwischen dem Federteller 12 und einer Wand 14 des Gehäuseteils 4 eingespannt.

Jede Zugstange 10 weist innerhalb der Bohrung 11 einen Antriebsabschnitt 15 mit einer Nut 16 auf, die einen schraubenförmigen Abschnitt 16a und einen geraden Abschnitt 16b hat. Eine Kugel 17, die in einer Kalotte in der Bohrungswand gelagert ist, greift in die Nut 16 ein und bewirkt durch den schraubenförmigen Abschnitt 16a eine Drehung der Zugstange 10, wenn diese in Längsrichtung der Bohrung 11 bewegt wird. Greift die Kugel 17 in den geraden Abschnitt 16b ein, so wird die Zugstange 10 gegen Drehung gesichert. Das von dem Flanschteil 3 entfernte, vordere Ende der Zugstange 10 ragt aus dem Futtergehäuse 2 heraus. An diesem Ende der Zugstange 10 ist ein Spannelement 18 mittels einer Schraube befestigt. Das Spannelement 18 hat eine zur Achse der Zugstange 10 parallele Bohrung, in der ein Schaft 20 eines Spannpilzes 19 und eine Druckfeder 21 angeordnet sind. Die Druckfeder 21 umgibt den Schaft 20 und ist mit einem Ende an dem Spannpilz 19 und mit dem anderen Ende an dem Spannelement 18 abgestützt. Auf dem freien, aus der Bohrung des Spannelements 18 herausragenden Ende des Schafts 20 sind zwei gegeneinander gekonterte Anschlagmuttern 22 angeordnet, die eine durch die Druckfeder 21 hervorgerufene Bewegung des Spannpilzes 19 in Richtung des Futtergehäuses 2 begrenzen. In der Gegenrichtung kann sich der Spannpilz 19 an dem Spannelement 18 unmittelbar abstützen.

Auf der dem Flanschteil 3 entgegengesetzten Seite weist das Gehäuseteil 4 des Futtergehäuses 2 eine topfförmige Ausnehmung 24 auf, in der ein Spanndorngehäuse 25 angeordnet ist. Das Spanndorngehäuse 25 ist mittels Zentrierflächen exakt in der Ausnehmung 24 zentriert und weist einen ringförmigen Kragen 26 auf, der mittels nicht dargestellter Schrauben fest mit dem Gehäuseteil 4 verbunden ist. Der Kragen 26 ist mit einer konischen Mantelfläche 28 in einem konischen Abschnitt 29 des Gehäuseteils 4 zentriert und in axialer Richtung abgestützt. Die dem Gehäuseteil 4 abgekehrte Stirnseite des Spanndorngehäuses 25 bildet eine ebene, ringförmige Spannfläche 27, gegen die ein Werkstück 50 mit Hilfe des Spannelements 18 und des Spannpilzes 19 spannbar ist.

In einer zylindrischen Bohrung des Spanndorngehäuses 25 ist eine Betätigungsbüchse 30 mit einer in der Büchsenbohrung ausgebildeten Betätigungskante 31 axial beweglich angeordnet. Die Betätigungsbüchse 30 betätigt einen Zentrierspannkörper 32, der in die Betätigungsbüchse 30 hineinragt und eine mit der Betätigungskante 31 zusammenwirkende konische Betätigungsfläche 33 hat. Der Zentrierspannkörper 32 hat die Form einer mit Schlitzen versehenen Büchse und ist auf einem Grundkörper 34 gelagert, der in dem Spanndorngehäuse 25 angeordnet und mit diesem fest verbunden ist. Das eine, vordere Ende des Zentrierspannkörpers 32 ragt auf der dem Gehäuseteil 4 abgekehrten Seite aus dem Spanndorngehäuse 25 heraus und ist mit einem Zentrierabschnitt kleineren Durchmessers versehen, der mit seiner Außenseite eine Spannkante 35 bildet. Auf der Innenseite weist der Zentrierabschnitt eine an dem Grundkörper 34 anliegende Stützkante 36 und eine Anschlagkante 37 auf, die in axialer Richtung an einer Schulter des Grundkörpers 34 anliegt. Durch einen am Grundkörper 34 ausgebildeten Vorsprung 38, der in eine Ringnut 39 in der Bohrung des Zentrierspannkörpers 32 eingreift, ist der Zentrierspannkörper 32 zusätzlich in axialer Richtung gegen Verschiebungen gesichert.

In einer Stufenbohrung 40 des Grundkörpers 34 ist ein Betätigungskörper 41 längsbeweglich angeordnet. Das dem Gehäuseteil 4 benachbarte Ende des Betätigungskörpers 41 ist mit einem Flansch 42 versehen. Zwischen dem Flansch 42 und einer Schulter des Grundkörpers 34 ist eine vorgespannte Druckfeder 43 angeordnet, die auf dem Betätigungskörper 41 geführt ist. Die Druckfeder 43 dient zur Betätigung der Betätigungsbüchse 30, die durch mindestens einen, vorzugsweise mehrere Verbindungsbolzen 44 mit dem Flansch 42 des Betätigungskörpers 41 fest verbunden ist. Der Verbindungsbolzen 44 erstreckt sich durch einen Schlitz 45 im Grundkörper 34. Die Länge des Schlitzes 45 ist an den Betätigungsweg der Betätigungsbüchse 30 angepasst.

### Die Arbeitsweise des Spannfutters 1 ist wie folgt:

In der zum Einsetzen oder Entnehmen eines Werkstücks 50 vorgesehenen Lösestellung ist das Betätigungselement 8 durch die Betätigungseinrichtung der Auswuchtspindel soweit in der Zeichnung nach rechts verschoben, dass der Federteller 12 an der Wand 14 anliegt, wie durch die strichpunktierte Linie 12a verdeutlicht. Der an dem Betätigungselement 8 anliegende Betätigungskörper 41 ist gleichermaßen verschoben, so dass die Betätigungsbüchse 30 sich in der Stellung 30a befindet. Die Bewegung des Betätigungselements 8 und des Betätigungskörpers 41 in die genannte Stellung erfolgt gegen die Kraft der Druckfedern 13 und 43, die bei dieser Bewegung stärker zusammengedrückt werden und ihre maximale Vorspannung erreichen. Die Betätigungskante 31 hat zur Betätigungsfläche 33 des Zentrierspannkörpers 32 einen großen axialen Abstand, der erforderlich ist, um einen ausreichend großen Schwenkwinkel der Spannelemente 18 zu erhalten. Die mit dem Betätigungselement 8 verbundenen Arme 9 und die mit diesen gekuppelten Zugstangen 10 sind ebenfalls entsprechend weit nach rechts verschoben und durch das Zusammenwirken von Nut 16 und Kugel 17 in eine Stellung gedreht, in welcher der Spannpilz 19 des jeweiligen Spannelements 18 von der Spannfläche 27 radial nach außen weggeschwenkt ist.

In das in der Lösestellung befindliche Spannfutter 1 wird das Werkstück 50 so eingesetzt, dass es mit seiner hohlzylindrischen Zentrierfläche 51 die Spannkante 35 des Zentrierspannkörpers 32 umgibt und dass es mit seiner ebenen Anlagefläche 52 an der Spannfläche 27 anliegt. Ist dies geschehen, so wird zum Spannen und Zentrieren des Werkstücks 50 die Betätigungseinrichtung der Auswuchtspindel in ihre zurückgezogene Ausgangslage zurück bewegt. Hierbei werden durch die Kraft der Druckfedern 13, 43 die mit dem Betätigungselement 8 verbundenen Zugstangen 10 und die Betätigungsbüchse 30 nach links bewegt. Dies hat zunächst zur Folge, dass die Zugstangen 10 in die Spannstellung gedreht werden, wobei die Spannelemente 18 mit ihrem Spannpilz 19 über das Werkstück 50 schwenken und die Spannpilze 19 das Werkstück 50 durch die kleinere Kraft der Druckfedern 21 an die Spannfläche 27 andrücken. Die Kraft der Druckfedern 21 ist hierbei so bemessen, dass das Werkstück 50 an der Spannfläche 27 in Anlage gehalten wird, aber die vorhandene Reibung überwunden und das Werkstück noch relativ zur Spannfläche 27 radial verschoben werden kann. Nach Erreichen dieses Spannzustands kommt infolge der fortschreitenden Bewegung des Betätigungselements 8 die Betätigungskante 31 der Betätigungsbüchse 30 mit der Betätigungsfläche 33 des Zentrierspannkörpers 32 in Kontakt und wirkt auf den Zentrierspannkörper 32 ein. Hierdurch wächst der Außendurchmesser im Bereich der Spannkante 35 und die Spannkante 35 wird an die Zentrierfläche 51 des Werkstücks 50 angedrückt, wobei sich der Zentrierspannkörper 32 radial nach innen mit der Stützkante 36 an dem Grundkörper 34 abstützt und dadurch eine exakte Zentrierung des Werkstücks 50 gewährleistet.

Nach Beendigung des Zentriervorgangs, der ausschließlich durch die Druckfeder 43 bewirkt wird, hebt das Betätigungselement 8 von dem Betätigungskörper 41 ab und bewegt unter der Wirkung der Druckfedern 13 die Zugstangen 10 noch weiter nach links. Hierdurch wird die Druckfeder 21 noch stärker zusammengedrückt und der Spannpilz 19 gelangt mit seiner Rückseite in Kontakt mit dem Spannelement 18. Die wesentlich höhere Betätigungskraft der Druckfeder 13 wird dadurch auf den Spannpilz 19 übertragen und das Werkstück 50 wird mit einer höheren Kraft an die Spannfläche 27 angedrückt. Durch die höhere Andruckkraft wird das Werkstück 50 für den anschließend durchzuführenden Auswuchtvorgang sicher und zuverlässig in dem Spannfutter 1 gehalten. Die Zeichnung zeigt das Spannfutter 1 in der erreichten Spannstellung, in der das Werkstück 50 zentriergenau in dem Spannfutter 1 festgespannt ist.

Die beschriebene Arbeitsweise des Spannfutters hat den Vorteil, dass das Werkstück mit großer Genauigkeit zuverlässig zentriert und gespannt werden kann und Spannfehler, wie Schräglage des Werkstücks, vermieden werden. Weiterhin ist von Vorteil, dass der gesamte Spannvorgang nach dem Einsetzen des Werkstücks vollautomatisch abläuft und keine besonderen Justiermaßnahmen notwendig sind. Das Spannfutter zeichnet sich außerdem durch eine kompakte Bauweise aus, die auch im Austausch mit bereits vorhandenen Spannfuttern einsetzbar ist.

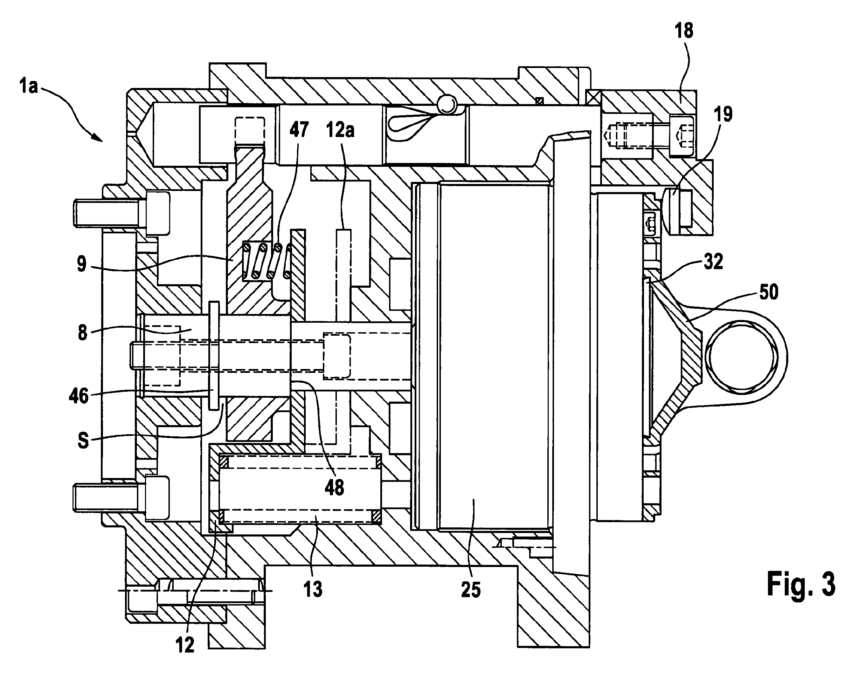

Figur 3 zeigt ein abgewandeltes Spannfutter 1a, welches sich von dem oben beschriebenen Spannfutter 1 durch eine andere Anordnung der Druckfeder 21 unterscheidet, im übrigen aber weitgehend mit dem Spannfutter 1 übereinstimmt. Für einander entsprechende Bauteile werden daher nachfolgend die gleichen Bezugszeichen verwendet.

Bei dem Spannfutter 1a sind die ein integrales Bauteil bildenden Arme 9 axial beweglich auf dem Betätigungselement 8 gelagert. Auf der dem Flanschteil 3 zugekehrten Seite der Arme 9 ist das Betätigungselement 8 mit einem Anschlag 46 versehen, an dem die Arme 9 in axialer Richtung abstützbar sind. Zwischen dem Anschlag 46 und den Armen 9 ist in der in Figur 3 gezeigten Spannstellung ein axiales Spiel S vorhanden. Auf der entgegengesetzten Seite haben die Arme 9 einen Ringbund, der an dem Federteller 12 unter der Wirkung der Druckfedern 13 anliegt. Die Arme 9 weisen auf ihrer dem Federteller 12 zugekehrten Seite jeweils eine Sackbohrung auf, in der eine vorgespannte Druckfeder 47 angeordnet ist, die sich an dem Federteller 12 abstützt. Die Druckfeder 47 ersetzt die bei dem Spannfutter 1 in dem Spannelement 18 angeordnete Druckfeder 21. Bei dem Spannfutter 1a ist daher der Spannpilz 19 mit dem Spannelement 18 fest verbunden.

In der in Figur 3 gezeigten Spannstellung sind die Druckfedern 47 maximal vorgespannt. Der Summe ihrer Vorspannkräfte ist erheblich kleiner als die Summe der Vorspannkräfte der Druckfedern 13.

Wenn das Betätigungselement 8 zum Entspannen der Spannfutters 1a betätigt wird, so wird von einer Stufe 48 des Betätigungselements 8 zunächst der Federteller 12 in der Zeichnung nach rechts bewegt, wobei die Druckfedern 13 stärker gespannt werden. Durch die Vorspannung der Druckfedern 47, die sich dabei etwas verringert, werden die Arme 9 in ihrer Spannposition festgehalten. Nach Überwindung des Spiels S werden durch den Anschlag 46 auch die Arme 9 von der Bewegung des Betätigungselements 8 mitgenommen und die Spannfutter 1a wird in die Lösestellung bewegt, in der sich der Federteller 12 an der Stelle 12a befindet und in der die Spannelemente 18 von dem Werkstück 50 weggeschwenkt sind.

Das Spannen des Werkstücks 50 erfolgt durch den umgekehrten Bewegungsablauf, wobei zunächst, angetrieben von den Druckfedern 13 und der im Inneren des Spanndorngehäuses 25 angeordneten Druckfeder 43, die Spannelemente 18 mit den Spannpilzen 19 an das Werkstück 50 angelegt und mit der Kraft der Druckfedern 47 angedrückt werden, sodann der Zentrierspannkörper 32 gespannt wird und schließlich, wenn der Federteller 12 sich an den Armen 9 anlegt, das Werkstück 50 von den Spannpilzen 19 mit der wesentlich höheren Kraft der Druckfedern 13 festgeklemmt wird.

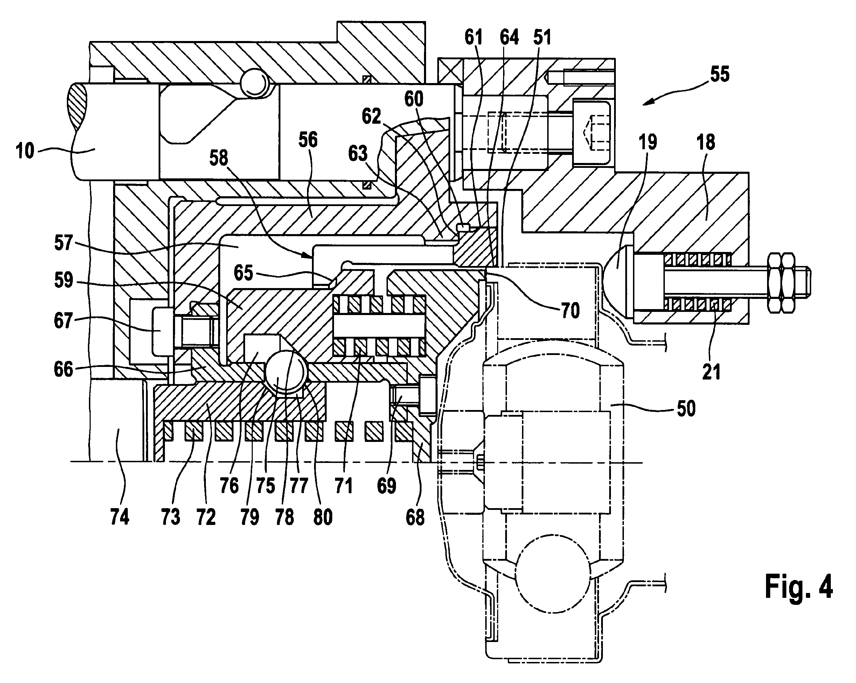

In Figur 4 ist eine weitere Ausführung eines erfindungsgemäßen Spannfutters 55 gezeigt, welches zum Spannen und Zentrieren des Werkstücks an einer zylindrischen Außenfläche eingerichtet ist. Das Spannfutter 55 hat ein topfförmiges Spannkörpergehäuse 56 mit einer Bohrung 57, in welcher ein Zentrierspannkörper 58 und eine Betätigungsbüchse 59 angeordnet sind. Der Zentrierspannkörper 58 hat die Form einer mit achsparallelen Schlitzen versehenen, im wesentlichen zylindrischen Buchse mit verstärkten Endabschnitten. Der vordere Endabschnitt bildet eine radial nach außen vorspringende Schulter, die in eine ringförmige Zentrierausnehmung 60 am offenen Ende der Bohrung 57 eingreift und mit einer Stützkante 61 radial nach außen an der Wand der Zentrierausnehmung 60 und mit einer Anschlagkante 62 in axialer Richtung an einer die Zentrierausnehmung 60 begrenzenden Schulter 63 des Spannkörpergehäuses abgestützt ist. Die vordere Stirnfläche des Zentrierspannkörpers 58 ist mit der vorderen Stirnfläche des Spannkörpergehäuses 56 bündig und bildet zusammen mit der Bohrungsfläche des vorderen Endabschnitts eine Spannkante 64 zum Zentrieren und Spannen eines Werkstücks. Der hintere Endabschnitt des Zentrierspannkörpers 58 bildet einen radial nach innen vorspringenden Kragen mit einer inneren, der Spannkante 64 zugewandten, konischen Betätigungsfläche 65, die mit einer Schulter der Betätigungsbüchse 59 zusammenwirkt. Die Betätigungsbüchse 59 ist auf einem zylindrischen Hülsenkörper 66 axial beweglich gelagert, der in der Bohrung des Spannkörpergehäuses 56 angeordnet ist und durch Schrauben 67 fest mit dem Spannkörpergehäuse 56 verbunden ist. An dem vorderen Ende des Hülsenkörpers 66 ist eine Platte 68 mittels Schrauben 69 befestigt. Die Platte 68 erstreckt sich radial nach außen bis in die Nähe der Spannkante 64 und weist dort eine von einem Ringbund gebildete radiale Spannfläche 70 auf. Die einander gegenüberliegenden Bereiche der Platte 68 und der Betätigungsbüchse 59 sind mit koaxialen Sackbohrungen versehen, in denen vorgespannte Druckfedern 71 in regelmäßigem Umfangsabstand angeordnet sind. Die Druckfedern 71 drücken die Betätigungsbüchse 59 gegen die Betätigungsfläche 65, wodurch der Zentrierspannkörper 58 gespannt wird.

In der Bohrung des Hülsenkörpers 66 ist ein becherförmiger Betätigungskörper 72 angeordnet, der durch eine an der Platte 68 abgestützte Druckfeder 73 belastet ist. Dem Betätigungskörper 72 liegt ein Betätigungselement 74 gegenüber, durch das der Betätigungskörper 72 entgegen der Kraft der Druckfeder 73 betätigbar ist. Der Betätigungskörper 72 tritt durch Kugeln 75 mit der Betätigungsbüchse 59 in Wirkverbindung. Die Kugeln 75 sind in regelmäßigem Abstand voneinander in radialen Durchgangsbohrungen des Hülsenkörpers 66 angeordnet und ihre Mittelpunkte liegen in einer gemeinsamen radialen Ebene. Der Durchmesser der Kugeln 75 ist etwa zwei- bis dreimal so groß wie die Wandstärke des Hülsenkörpers 66, so dass die Kugeln 75 innen und außen aus der Wand des Hülsenkörpers 66 hervorstehen können. Die Kugeln 75 greifen in eine Ringnut 76 in der Bohrungsfläche der Betätigungsbüchse 59 und in eine Ringnut 77 in der Mantelfläche des Betätigungskörpers 72 ein. Die eine Seitenwand 78 der Ringnut 76, die dem von der Druckfeder 71 beaufschlagten Ende der Betätigungsbüchse 59 benachbart ist, ist konisch ausgebildet mit einer Neigung von etwa 45° zur Längsachse. Die Ringnut 77 hat eine konische Seitenwand 79 von entsprechender Neigung, die an den Anlagestellen zwischen den Kugeln 75 und der Seitenwand 78 diametral gegenüberliegenden Stellen der Kugeln 75 anliegt. Die Kugeln 75 bilden mit den Ringnuten 76, 77 ein Getriebe, welches die Bewegung des Betätigungskörpers 72 auf die Betätigungsbüchse 59 überträgt und nach Erreichen eines vorgegebenen Betätigungsweges die Wirkverbindung zwischen dem Betätigungskörper 72 und der Betätigungsbüchse 59 trennt, so dass der Betätigungskörper 72 unabhängig von der Betätigungsbüchse 59 weiter bewegt werden kann.

Wie bei dem in Figur 1 gezeigten Spannfutter 1 ist auch bei dem Spannfutter 55 das Betätigungselement 74 über nicht dargestellte Arme 9 und Zugstangen 10 mit Spannelementen 18 verbunden, die über an Federn 21 abgestützte Spannpilze 19 das Werkstück 50 gegen die Spannfläche 70 spannen.

Figur 4 zeigt das Spannfutter 55 in der Spannstellung, in der ein Werkstück 50 zentriergenau für das anschließende Auswuchten gespannt ist. Hierbei wirken die Druckfedern 71 über die Betätigungsbüchse 59 auf den Zentrierspannkörper 58 ein, wodurch dieser mit seiner Spannkante 64 an die zylindrische Zentrierfläche 51 des Werkstücks 50 angepresst wird. In axialer Richtung ist das Werkstück 50 zwischen der Spannfläche 70 und dem Spannpilz 19 mit großer Betätigungskraft festgespannt, die von einem nicht dargestellten, auf das Betätigungselement 74 einwirkenden Federelement erzeugt wird. Zwischen dem Betätigungselement 74 und dem Betätigungskörper 72 ist ein Spalt vorhanden und der Betätigungskörper 72 stützt sich mit der der Seitenwand 79 gegenüberliegenden und mit einer Kegelfläche versehenen Kante 80 der Ringnut 77 unter der Wirkung der Druckfeder 73 an den Kugeln 75 ab. Die Kugeln 75 werden hierdurch radial nach außen an die Seitenwand 78 angedrückt und sind dadurch spielfrei gehalten. Die Kraft der Druckfeder 73 ist erheblich kleiner als die Kraft der Druckfeder 71, so dass das spielfrei Halten der Kugeln 75 keinen nennenswerten Einfluss auf das Betätigen des Zentrierspannkörpers 58 hat.

Das Ausspannen des Werkstücks 50 aus dem Spannfutter 55 erfolgt durch Bewegen des Betätigungselements 74 in Richtung der Platte 68. Durch diese Bewegung, die auch auf die Zugstangen 10 übertragen wird, wird zunächst die axiale Spannkraft reduziert, da die Spannpilze 19 von den Spannelementen 18 abheben und dann nur noch durch die schwächeren Druckfedern 21 an das Werkstück 50 angedrückt werden. Das Betätigungselement 74 kommt danach mit dem Betätigungskörper 72 in Eingriff und drückt diesen mit der Seitenwand 79 gegen die Kugeln 75. Hierdurch werden die Kugeln 75 radial nach außen in die Ringnut 76 gedrückt, wodurch die Betätigungsbüchse 59 an die Platte 68 heranbewegt und die Druckfedern 71 zusammengedrückt werden. Die Betätigungsbüchse 59 löst sich hierbei von der Betätigungsfläche 65 des Zentrierspannkörpers 58, so dass dieser aufgrund seiner Eigenelastizität seine Lösestellung einnimmt, in der der Innendurchmesser der Spannkante 64 größer ist als der Außendurchmesser der Zentrierfläche 51 des Werkstücks 50. Bei Erreichen dieser Stellung des Betätigungselements 74 halten die Druckpilze 19 unter der Wirkung der Druckfedern 21 das Werkstück 50 noch fest. Um das Werkstück 50 vollends freizugeben, wird das Betätigungselement 74 noch weiter in Richtung der Platte 68 bewegt. Hierbei werden die Kugeln 75 vollkommen aus der Ringnut 77 herausgedrängt, so dass der Betätigungskörper 72 an den Kugeln 75 vorbei weiter in Richtung der Platte 68 geschoben werden kann, ohne dass diese Bewegung auf die Betätigungsbüchse 59 übertragen wird. Der Betätigungsweg der Betätigungsbüchse 59 und der daran abgestützten Druckfedern 71 bleibt daher verhältnismäßig klein, was bauliche Vorteile hat. Weiterhin muss die Kraft der Druckfedern 71 von der das Betätigungselement 74 bewegenden Antriebseinrichtung nicht mehr überwunden werden, sondern nur noch der durch Kraft dieser Federn verursachte Reibungswiderstand. Durch diesen letzten Abschnitt des Betätigungswegs des Betätigungselements 74 werden die Spannpilze 19 von dem Werkstück gelöst und die Spannelemente 18 werden durch die Drehung der Zugstangen 10 aus dem Zuführbereich für das Werkstück herausgeschwenkt.

Das Spannen eines neuen Werkstücks erfolgt durch Umkehrung des beschriebenen Bewegungsablaufs, wobei wiederum nacheinander zunächst die Spannpilze 19 unter der Wirkung der Druckfedern 21, dann der Zentrierspannkörper 58 unter der Wirkung der Druckfedern 71 und zum Schluss die höhere Kraft eines auf das Betätigungselement 74 einwirkenden Federelements über die Spannpilze 19 zur Wirkung kommen.

## Patentansprüche

1. Verfahren zum Zentrieren und Spannen eines Werkstücks, insbesondere einer Gelenkwelle, in einer Auswuchtmaschine, umfassend die Schritte Positionieren eines Werkstücks (50) mit einer Zentrierfläche (51) auf einem Zentrierspannkörper (32) eines Spannfutters (1), wobei der Zentrierspannkörper (32) einen Zentrierabschnitt aufweist, dessen Durchmesser veränderbar ist, Zentrieren des Werkstücks durch Spannen des Zentrierspannkörpers (32) gegen die Zentrierfläche (51) des Werkstücks (50) und Spannen des Werkstücks (50) durch Andrücken einer radialen Anlagefläche (52) des Werkstücks (50) an eine Spannfläche (27) des Spannfutters (1), **dadurch gekennzeichnet, dass** vor dem Spannen des Zentrierspannkörpers (32) gegen die Zentrierfläche (51) des Werkstücks (50) das Werkstück (50) mit einer radiales Bewegen des Werkstücks (50) noch zulassenden ersten Kraft mit der radialen Anlagefläche (52) an die Spannfläche (27) des Spannfutters angedrückt wird, und dass nach dem Spannen des Zentrierspannkörpers (32) gegen die Zentrierfläche (51) des Werkstücks (50) das Werkstück (50) mit der radialen Anlagefläche (52) an die Spannfläche (27) des Spannfutters (1) mit einer gegenüber der ersten Kraft größeren, zweiten Kraft an der Spannfläche (27) des Spannfutters (1) festgeklemmt wird..

2. Verfahren nach Anspruch 1, **dadurch gekennzeichnet, dass** die zweite Kraft wenigstens um den Faktor 3 größer als die erste Kraft.

3. Spannfutter zum Zentrieren und Spannen eines Werkstücks, insbesondere einer Gelenkwelle, in einer Auswuchtmaschine umfassend einen Zentrierspannkörper (32) mit einem Zentrierabschnitt, dessen Durchmesser veränderbar ist, eine dem Zentrierspannkörper (32) benachbarte, sich radial erstreckende Spannfläche (27), ein bewegbares Spannelement (18) zum axialen Andrücken des Werkstücks an die Spannfläche (27), ein erstes Federelement (43), durch das der Zentrierspannkörper (32) in eine Spannstellung bewegbar ist, und eine axial bewegbare Betätigungsvorrichtung, durch welche der Zentrierspannkörper (32) entgegen der Kraft des ersten Federelements (43) und das Spannelement (18) in eine Lösestellung bewegbar sind, **gekennzeichnet durch** ein zweites Federelement (21), **durch** welches das Spannelement (18) mit einer ersten Kraft beaufschlagbar ist, die so bemessen ist, dass das Werkstück an der Spannfläche (27) in Anlage gehalten wird, aber die vorhandene Reibung überwunden und das Werkstück noch relativ zur Spannfläche (27) radial verschoben werden kann, ein drittes Federelement (13), **durch** welches das Spannelement (18) mit einer im Vergleich zur ersten Kraft höheren zweiten Kraft an das Werkstück andrückbar ist, wobei der Zentrierspannkörper (32) und das Spannelement (18) **durch** die axial bewegbare Betätigungsvorrichtung entgegen der Kraft des ersten und des dritten Federelements (43, 13) in eine Lösestellung bewegbar sind.

4. Spannfutter nach Anspruch 3, **dadurch gekennzeichnet, dass** das Spannelement (18) an dem Ende einer Zugstange (10) befestigt ist.

5. Spannfutter nach Anspruch 4, **gekennzeichnet durch** ein Futtergehäuse (2) mit einer mittigen Bohrung (7), in der ein Betätigungselement (8) längs beweglich gelagert ist, das wenigstens einen Arm (9) aufweist, der sich im Futtergehäuse (2) radial nach außen erstreckt, wobei das radial äußere Ende des Arms (9) mit der Zugstange (10) gekuppelt ist, die in einer zur Bohrung (7) achsparallele Bohrung (11) im Futtergehäuse (2) längsbeweglich und drehbar gelagert ist.

6. Spannfutter nach Anspruch 5, **dadurch gekennzeichnet, dass** die Zugstange (10) einen Antriebsabschnitt (15) mit einer Nut (16) aufweist, die einen schraubenförmigen Abschnitt (16a) und einen geraden Abschnitt (16b) hat, wobei ein gehäusefester Vorsprung in die Nut (16) derart eingreift, dass der gerade Abschnitt (16b) die Zugstange (10) gegen Drehung sichert und der schraubenförmige Abschnitt (16a) eine Drehung der Zugstange (10) bewirkt, wenn diese in Längsrichtung der Bohrung (11) bewegt wird.

7. Spannfutter nach einem der Ansprüche 3 bis 6, **dadurch gekennzeichnet, dass** das Betätigungselement (8) einen Federteller (12) trägt, wobei als drittes Federelement mehrere vorgespannte Druckfedern (13) in gleichmäßigem Abstand voneinander um das Betätigungselement (8) herum angeordnet und zwischen dem Federteller (12) und einer Wand (14) des Futtergehäuses (2) eingespannt sind.

8. Spannfutter nach einem der Ansprüche 3 bis 7, **dadurch gekennzeichnet, dass** das Spannelement (18) eine Bohrung aufweist, in der ein Spannpilz (19) und als zweites Federelement eine Druckfeder (21) angeordnet sind.

9. Spannfutter nach Anspruch 7, **dadurch gekennzeichnet, dass** der Arm (9) zwischen einem Anschlag (46) am Betätigungselement (8) und dem Federteller (12) axial bewegbar auf dem Betätigungselement (8) gelagert ist und dass auf der den Druckfedern (13) abgekehrten Seite zwischen dem Federteller (12) und dem Arm (9) als zweites Federelement eine vorgespannte Druckfeder (47) angeordnet ist.

10. Spannfutter nach einem der Ansprüche 3 bis 9, **dadurch gekennzeichnet, dass** das Futtergehäuse (2) eine topfförmige Ausnehmung (24) aufweist, in der ein Spanndorngehäuse (25) angeordnet ist.

11. Spannfutter nach Anspruch 10, **dadurch gekennzeichnet, dass** eine Stirnseite des Spanndorngehäuses (25) oder ein mit dem Spanndorngehäuse verbundenes Teil eine ebene, ringförmige Spannfläche (27) bildet.

12. Spannfutter nach einem der Ansprüche 10 oder 11, **dadurch gekennzeichnet, dass** in einer zylindrischen Bohrung des Spanndorngehäuses (25) eine Betätigungsbüchse (30) mit einer in der Büchsenbohrung ausgebildeten Betätigungskante (31) zur Betätigung des Zylinderspannkörpers (32) axial beweglich angeordnet ist.

13. Spannfutter nach einem der Ansprüche 10 bis 12, **dadurch gekennzeichnet, dass** der Zylinderspannkörper (32, 58) die Form einer mit Schlitzen versehenen Büchse hat, die an einem in dem Spanndorngehäuse (25) angeordneten und mit diesem fest verbundenen Grundkörper (34) oder an dem Spanndorngehäuse (56) gelagert ist.

14. Spannfutter nach Anspruch 13, **dadurch gekennzeichnet, dass** in einer Stufenbohrung (40) des Grundkörpers (34) ein Betätigungskörper (41) mit einem Flansch (42) längsbeweglich angeordnet ist und zwischen dem Flansch (42) und einer Schulter des Grundkörpers (34) ist als erstes Federelement eine vorgespannte Druckfeder (43) angeordnet ist.

15. Spannfutter nach Anspruch 14, **dadurch gekennzeichnet, dass** die Betätigungsbüchse (30) durch mindestens einen Verbindungsbolzen (44) mit dem Flansch (42) des Betätigungskörpers (41) fest verbunden ist.

16. Spannfutter nach einem der Ansprüche 12 bis 15, **dadurch gekennzeichnet, dass** ein Getriebe vorgesehen ist, welches eine Bewegung des Betätigungskörpers (72) auf die Betätigungsbüchse (59) überträgt und nach Erreichen eines vorgegebenen Betätigungsweges die Übertragungsverbindung zwischen dem Betätigungskörper (72) und der Betätigungsbüchse (59) trennt.

17. Spannfutter nach Anspruch 16, **dadurch gekennzeichnet, dass** die Betätigungsbüchse (59) ist auf einem zylindrischen Hülsenkörper (66) axial beweglich gelagert ist, der in der Bohrung des Spannkörpergehäuses (56) angeordnet ist, wobei an dem vorderen, freien Ende des Hülsenkörpers (66) ist eine Platte (68) mittels Schrauben (69) befestigt ist und zwischen der Betätigungsbüchse (59) und der Platte (68) das erste Federelement bildende vorgespannte Druckfedern (71) angeordnet sind.

18. Spannfutter nach Anspruch 17, **dadurch gekennzeichnet, dass** in der Bohrung des Hülsenkörpers (66) ist ein Betätigungskörper (72) angeordnet ist, der durch eine an der Platte (68) abgestützte Druckfeder (73) belastet ist und dass in radialen Durchgangsbohrungen des Hülsenkörpers (66) Kugeln (75) angeordnet sind, die in eine Ringnut (76) in der Bohrungsfläche der Betätigungsbüchse (59) und in eine Ringnut (77) in der Mantelfläche des Betätigungskörpers (72) derart eingreifen, dass eine axiale Bewegung von dem Betätigungskörper (72) auf die Betätigungsbüchse (59) übertragbar ist.

## Claims

1. Method for centring and clamping a workpiece, in particular an articulated shaft, in a balancing machine comprising the steps of positioning a workpiece (50) with a centring surface (51) on a centring clamping member (32) of a chuck (1), wherein the centring clamping member (32) has a centring portion having a variable diameter, centring the workpiece by clamping the centring clamping member (32) against the centring surface (51) of the workpiece (50) and clamping the workpiece (50) by pressing a radial contact surface (52) of the workpiece (50) against a clamping surface (27) of the chuck (I), **characterised in that**, before clamping the centring clamping member (32) against the centring surface (51) of the workpiece (50), the workpiece (50) is pressed with its radial contact surface (52) against the clamping surface (27) of the chuck with a first force which still allows radial movement of the workpiece (50), and **in that**, after clamping the centring clamping member (32) against the centring surface (51) of the workpiece (50), the workpiece (50) is clamped with its radial contact surface (52) against the clamping surface (27) of the chuck (1) with a second force which is greater compared to the first force.

2. Method according to claim 1, **characterised in that** the second force is at least three times greater than the first force.

3. Chuck for centring and clamping a workpiece, in particular an articulated shaft, in a balancing machine comprising a centring clamping member (32) with a centring portion having a variable diameter, a radially extending clamping surface (27), which is adjacent to the centring clamping member (32), a movable clamping element (18) for axially pressing the workpiece against the clamping surface (27), a first spring element (43) via which the centring clamping member (32) can be moved into a clamping position, and an axially movable actuating device via which the centring clamping member (32) is movable against the force of the first spring element (43) and the clamping element (18) is movable into a release position, **characterised by** a second spring element (21) via which the clamping element (18) can be loaded with a first force of such a size that the workpiece is held in abutment against the clamping surface 27 but the friction present can be overcome and the workpiece can still be radially displaced relative to the clamping surface 27, a third spring element (13), via which the clamping element (18) can be pressed to the workpiece with a second force, which is higher compared to the first force, wherein the centring clamping member (32) and the clamping element (18) can be moved into a release position against the force of the first and third spring elements (43, 13) by means of the axially movable actuating device.

4. Chuck according to claim 3, **characterised in that** the clamping element (18) is attached to the end of a connecting rod (10).

5. Chuck according to claim 4, **characterised by** a chuck housing (2) with a central hole (7), in which an actuating element (8) is mounted so as to be longitudinally movable, which element comprises at least one arm (9) that extends radially outwards in the chuck housing (2), the radially outer end of the arm (9) being connected to the connecting rod (10), which is mounted so as to be rotatable and longitudinally movable in a hole (11) that is axially parallel to the hole (7).

6. Chuck according to claim 5, **characterised in that** the connecting rod (10) comprises a drive portion (15) with a groove (16), which has a helical portion (16a) and a straight portion (16b), wherein a projection fixed to the housing engages with the groove (16) in such a way that the straight portion (16b) prevents the connecting rod (10) from rotating and the helical portion (16a) causes the connecting rod (10) to rotate when the connecting rod is moved in the longitudinal direction of the hole (11).

7. Chuck according to any one of claims 3 to 6, **characterised in that** the actuating element (8) carries a spring plate (12), a plurality of biased compression springs (13) being arranged as a third spring element at a uniform distance from one another around the actuating element (8) and being clamped between the spring plate (12) and a wall (14) of the chuck housing (2).

8. Chuck according to any one of claims 3 to 7, **characterised in that** the clamping element (18) comprises a hole, in which a dome-headed clamping member (19) and a compression spring (21), as a second spring element, are arranged.

9. Chuck according to claim 7, **characterised in that** the arm (9) is mounted on the actuating element (8) so as to be axially movable between a stop (46) on the actuating element (8) and the spring plate (12), and **in that** a biased compression spring (47), as a second spring element, is arranged on the side remote from the compression springs (13) between the spring plate (12) and the arm (9).

10. Chuck according to any one of claims 3 to 9, **characterised in that** the chuck housing (2) comprises a cup-shaped recess (24), in which a mandrel housing (25) is arranged.

11. Chuck according to claim 10, **characterised in that** an end face of the mandrel housing (25) or a part connected to the mandrel housing forms a planar, annular clamping surface (27).

12. Chuck according to either claim 10 or claim 11, **characterised in that** an actuating bushing (30) with an actuating edge (31) formed in the bushing hole for actuating the cylindrical clamping member (32) is axially movably arranged in a cylindrical hole in the mandrel housing (25).

13. Chuck according to any one of claims 10 to 12, **characterised in that** the cylindrical clamping member (32, 58) has the shape of a bushing provided with slots, which bushing is mounted on a base element (34) arranged in the mandrel housing (25) and rigidly connected thereto or on the mandrel housing (56).

14. Chuck according to claim 13, **characterised in that** an actuating member (41) with a flange (42) is longitudinally movably arranged in a stepped hole (40) in the base element (34) and a biased compression spring (43), as a first spring element, is arranged between the flange (42) and a shoulder of the base element (34).

15. Chuck according to claim 14, **characterised in that** the actuating bushing (30) is rigidly connected to the flange (42) of the actuating member (41) by means of at least one connecting bolt (44).

16. Chuck according to any one of claims 12 to 15, **characterised in that** a transmission means is provided, which transmits a movement of the actuating member (72) to the actuating bushing (59) and disconnects the transmission connection between the actuating member (72) and the actuating bushing (59) once a predetermined actuating distance has been reached.

17. Chuck according to claim 16, **characterised in that** the actuating bushing (59) is mounted so as to be axially movable on a cylindrical tube member (66), which is arranged in the hole in the clamping member housing (56), wherein a plate (68) is fastened to the leading free end of the tube member (66) by screws (69), and biased compression springs (71) forming the first spring element are arranged between the actuating bushing (59) and the plate (68).

18. Chuck according to claim 17, **characterised in that** an actuating member (72) is arranged in the hole in the tube member (66), which actuating member is loaded via a compression spring (73) supported on the plate (68) and **in that** balls (75) are arranged in radial through-holes in the tube member (66), which balls engage in an annular groove (76) in the hole surface of the actuating bushing (59) and in an annular groove (77) in the lateral surface of the actuating member (72) in such a way that an axial movement can be transmitted from the actuating member (72) to the actuating bushing (59).

## Revendications

1. Procédé de centrage et de serrage d'une pièce, en particulier d'un arbre de transmission, dans une machine d'équilibrage, comprenant les étapes consistant à positionner une pièce (50) dotée d'une surface de centrage (51) sur un corps de serrage de centrage (32) d'un mandrin de serrage (1), le corps de serrage de centrage (32) comprenant une partie de centrage dont le diamètre est variable, à centrer la pièce par serrage du corps de serrage de centrage (32) contre la surface de centrage (51) de la pièce (50) et à serrer la pièce (50) par pression d'une surface d'appui radiale (52) de la pièce (50) contre une surface de serrage (27) du mandrin de serrage (1), **caractérisé en ce que**, avant le serrage du corps de serrage de centrage (32) contre la surface de centrage (51) de la pièce (50), la pièce (50) est pressée au moyen d'une première force admettant encore un déplacement radial de la pièce (50) avec la surface d'appui radiale (52) contre la surface de serrage (27) du mandrin de serrage, et **en ce que**, après le serrage du corps de serrage de centrage (32) contre la surface de centrage (51) de la pièce (50), la pièce (50) avec la surface d'appui radiale (52) contre la surface de serrage (27) du mandrin de serrage (1) est serrée à bloc contre la surface de serrage (27) du mandrin de serrage (1) au moyen d'une seconde force supérieure à la première force.

2. Procédé selon la revendication 1, **caractérisé en ce que** la seconde force est supérieure à la première force d'au moins un facteur 3.

3. Mandrin de serrage destiné à centrer et à serrer une pièce, en particulier un arbre de transmission, dans une machine d'équilibrage comprenant un corps de serrage de centrage (32) doté d'une partie de centrage dont le diamètre est variable, d'une surface de serrage (27) voisine du corps de serrage de centrage (32) et s'étendant radialement, d'un élément de serrage mobile (18) destiné à presser axialement la pièce contre la surface de serrage (27), d'un premier élément ressort (43) permettant de déplacer le corps de serrage de centrage (32) dans une position de serrage et d'un dispositif d'actionnement axialement mobile permettant de déplacer le corps de serrage de centrage (32) à l'encontre de la force du premier élément ressort (43) et l'élément de serrage (18) dans une position de desserrage, **caractérisé par** un deuxième élément ressort (21) permettant de soumettre l'élément de serrage (18) à l'effet d'une première force dimensionnée de sorte que la pièce soit retenue en butée contre la surface de serrage (27), mais que le frottement présent puisse être surmonté et que la pièce puisse encore être déplacée radialement par rapport à la surface de serrage (27), un troisième élément ressort (13) permettant de presser l'élément de serrage (18) contre la pièce au moyen d'une seconde force supérieure à la première force, le corps de serrage de centrage (32) et l'élément de serrage (18) pouvant être déplacés par le dispositif d'actionnement axialement mobile à l'encontre de la force du premier et du troisième élément ressort (43, 13) dans une position de desserrage.

4. Mandrin de serrage selon la revendication 3, **caractérisé en ce que** l'élément de serrage (18) est fixé à l'extrémité d'une barre de traction (10).

5. Mandrin de serrage selon la revendication 4, **caractérisé par** un boîtier de mandrin (2) doté d'un trou central (7) dans lequel un élément d'actionnement (8) est monté mobile dans le sens de la longueur et comprend au moins un bras (9) s'étendant radialement vers l'extérieur dans le boîtier de mandrin (2), l'extrémité radialement extérieure du bras (9) étant accouplée à la barre de traction (10) montée mobile longitudinalement et en rotation dans un trou (11) en parallélisme axial par rapport au trou (7) dans le boîtier de mandrin (2).

6. Mandrin de serrage selon la revendication 5, **caractérisé en ce que** la barre de traction (10) comprend une partie d'entraînement (15) dotée d'une rainure (16) présentant une partie hélicoïdale (16a) et une partie rectiligne (16b), une saillie fixée au boîtier s'insérant dans la rainure (16) de telle sorte que la partie rectiligne (16b) bloque en rotation la barre de traction (10) et que la partie hélicoïdale (16a) provoque une rotation de la barre de traction (10) lorsque celle-ci est déplacée dans le sens longitudinal du trou (11).

7. Mandrin de serrage selon l'une des revendications 3 à 6. **caractérisé en ce que** l'élément d'actionnement (8) porte une coupelle de ressort (12), plusieurs ressorts de pression (13) précontraints étant disposés à égale distance les uns des autres autour de l'élément d'actionnement (8) en tant que troisième élément ressort et étant enserrés entre la coupelle de ressort (12) et une paroi (14) du boîtier de mandrin (2).

8. Mandrin de serrage selon l'une des revendications 3 à 7, **caractérisé en ce que** l'élément de serrage (18) comprend un trou dans lequel sont disposés un champignon de serrage (19) et un ressort de pression (21) en tant que deuxième élément ressort.

9. Mandrin de serrage selon la revendication 7, **caractérisé en ce que** le bras (9) est monté mobile axialement sur l'élément d'actionnement (8) entre une butée (46) sur l'élément d'actionnement (8) et la coupelle de ressort (12), et **en ce qu'**un ressort de pression (47) précontraint est disposé en tant que deuxième élément ressort sur le côté opposé aux ressorts de pression (13) entre la coupelle de ressort (12) et le bras (9).

10. Mandrin de serrage selon l'une des revendications 3 à 9, **caractérisé en ce que** le boîtier de mandrin (2) comprend un évitement en forme de pot (24) dans lequel est disposé un boîtier de broche de serrage (25).

11. Mandrin de serrage selon la revendication 10, **caractérisé en ce qu'**un côté frontal du boîtier de broche de serrage (25) ou une pièce reliée au boîtier de broche de serrage forme une surface de serrage annulaire plate (27).

12. Mandrin de serrage selon l'une des revendications 10 ou 11, **caractérisé en ce qu'**un manchon d'actionnement (30) doté d'une arête d'actionnement (31) formée dans le trou de manchon et destiné à actionner le corps de serrage de cylindre (32) est monté axialement mobile dans un trou cylindrique du boîtier de broche de serrage (25).

13. Mandrin de serrage selon l'une des revendications 10 à 12, **caractérisé en ce que** le corps de serrage cylindrique (32, 58) présente la forme d'un manchon pourvu de fentes et monté sur un corps de base (34) disposé dans le boîtier de broche de serrage (25) et fixé solidement à celui-ci ou sur le boîtier de broche de serrage (56).

14. Mandrin de serrage selon la revendication 13, **caractérisé en ce qu'**un corps d'actionnement (41) doté d'une bride (42) est monté mobile dans le sens de la longueur dans un trou étagé (40) du corps de base (34) et un ressort de pression précontraint (43) est disposé en tant que premier élément ressort entre la bride (42) et un épaulement du corps de base (34).

15. Mandrin de serrage selon la revendication 14, **caractérisé en ce que** le manchon d'actionnement (30) est fixé solidement par au moins un boulon d'assemblage (44) à la bride (42) du corps d'actionnement (41).

16. Mandrin de serrage selon l'une des revendications 12 à 15, **caractérisé en ce qu'**il est prévu une transmission qui transfère un déplacement du corps d'actionnement (72) sur le manchon d'actionnement (59) et, une fois un trajet d'actionnement prédéfini atteint, rompt la liaison de transfert entre le corps d'actionnement (72) et le manchon d'actionnement (59).

17. Mandrin de serrage selon la revendication 16, **caractérisé en ce que** le manchon d'actionnement (59) est monté mobile axialement sur un corps de douille cylindrique (66) disposé dans le trou du boîtier de corps de serrage (56), une plaque (68) étant fixée sur l'extrémité libre avant du corps de douille (66) au moyen de vis (69) et des ressorts de pression (71) précontraints formant le premier élément ressort étant disposés entre le manchon d'actionnement (59) et la plaque (68).

18. Mandrin de serrage selon la revendication 17, **caractérisé en ce qu'**un corps d'actionnement (72) sollicité par un ressort de pression (73) en appui sur la plaque (68) est disposé dans le trou du corps de douille (66), et **en ce que** des sphères (75) sont disposées dans des trous de passage radiaux du corps de douille (66), lesquelles sphères s'insérant de telle sorte dans une rainure annulaire (76) réalisée dans la surface du trou du manchon d'actionnement (59) et dans une rainure annulaire (77) dans la surface du corps d'actionnement (72), qu'un déplacement axial puisse être transféré du corps d'actionnement (72) au manchon d'actionnement (59).
